(19) Europäisches Patentamt
European Patent Office
Office européen des brevets

(11) Publication number: **0 328 849 B1**

# (12) EUROPEAN PATENT SPECIFICATION

(45) Date of publication of patent specification: **16.03.94**

(51) Int. Cl.5: **A23G 3/30**

(21) Application number: **88810875.0**

(22) Date of filing: **19.12.88**

## (54) Use of a racemic mixture of alpha-D-glucopyranosyl-1-6-mannitol and alpha-D-glucopyranosyl-1-6-sorbitol in a sugarless low-moisture absorbing chewing gum composition.

(30) Priority: **23.12.87 US 137396**

(43) Date of publication of application:
**23.08.89 Bulletin 89/34**

(45) Publication of the grant of the patent:
**16.03.94 Bulletin 94/11**

(84) Designated Contracting States:
**BE CH DE ES FR GB GR IT LI NL SE**

(56) References cited:
**WO-A-88/08671**
**DE-A- 3 120 857**
**US-A- 4 238 510**
**US-A- 4 323 588**

**Developments in Sweeteners 1, 1987**

(73) Proprietor: **WARNER-LAMBERT COMPANY**
**201 Tabor Road**
**Morris Plains New Jersey 07950(US)**

(72) Inventor: **Cherukuri, Subraman Rao**
**10 Jean Drive**
**Towaco New Jersey 07082(US)**
Inventor: **Faust, Steven Michael**
**4-51 Audubon Court**
**Stanhope New Jersey 07874(US)**
Inventor: **Orlandi, Daniel Anthony**
**61-40 149th Street**
**Flushing New York 11367(US)**
Inventor: **Zamudio-Tena, Francisco**
**33 Willow Street**
**Morristown New Jersey 07960(US)**

(74) Representative: **Mansmann, Ivo et al**
**Gödecke AG**
**Patentwesen**
**Mooswaldallee 1-9**
**D-79090 Freiburg (DE)**

**EP 0 328 849 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to the use of a racemic mixture of alpha-D-glucopyranosyl-1-6-mannitol and alpha-D-glucopyranosyl-1-6-sorbitol in a sugarless low-moisture absorbing chewing gum composition: Such use provides chewing gum products having a low moisture pickup while retaining good organoleptic properties and shelf-life. More particularly, said use provides for chewing gums which prevent moisture absorption in the chewing gum and impart a firm texture to the final gum product. This firmness must be sufficiently hard to facilitate coating the gum piece with a crunchy confectionery composition, but not so hard that the chew is unacceptable from a commercial standpoint.

Chewing gum compositions are, in general, composed of a water-insoluble or base portion and a water-soluble chewing gum portion which primarily contains the sweetness and flavor components. In order to provide an acceptably sweet gum product it is important to consider both of the major components of the overall gum compositions. Thus, in order to retain acceptable sweetness, flavor, and texture while retaining good shelf-life, it is important to provide an environment in which the different gum components maintain their characteristic qualities and are not degraded by moisture or other gum components. Both moisture loss and gain have been known to have particularly harmful effects on the life of gum products.

A non-staling chewing gum composition and method for preparation thereof has been disclosed in U.S. Patent No. 4,579,738 to Cherukuri, et al. which describes a natural sweetener-containing chewing gum composition being substantially free from water and having advantageous process characteristics and shelf-life stability. The chewing gum compositions have exceptionally long period of shelf-life without protective packaging and without the use of humectants as is traditionally used in the art. The chewing gum compositions of the Cherukuri, et al. '738 disclosure include an edible food material which is capable of being formed into particles having microporous channels wherein flavoring liquid can be absorbed and which absorb moisture from the saliva when the gum product is masticated such that the particles swell and impart a juiciness to the gum. This chewing gum composition is advantageous in that it does not require high moisture or moisture-containing additives in order to obtain a viscosity which is suitable and homogenous for both processing and for ultimate gum product satisfaction. As a consequence, ingredients which are normally unstable in the presence of moisture such as aspartame, can be included without serious concern of its deterioration.

In the past chewing gum compositions have been provided with low percentages of moisture in the final product generally by driving off the water once the chewing gum formulation has been made. Thus, for example, the prior art compositions ordinarily contain water and/or moisture-containing ingredients, i.e., sorbitol solution, corn syrup solutions, etc., and would therefore require heating or purification of the compositions to drive off water and obtain a certain moisture content. For example, U.S. Patent No. 4,035,572 discloses a gum based formulation with less than 0.5% moisture. This level percentage of moisture is due to the purification process which removes water and salivant from the gum base.

U.S. Patent No. 4,382,963 involves a low calorie chewing gum which uses polydextrose as the sole soluble bulking agent. The moisture content in the final product is

1 to 5% and this is obtained by omitting the aqueous component e.g., sorbitol syrups or corn syrups which are normally used in chewing gum products.

U.S. Patent No. 3,262,784 discloses a chewing gum composition which has less then 1% moisture in the final product due to heating between 76.7 ° C and 121.1 ° C (170 - 250 ° F) off the water.

U.S. Patent No. 4,150,161 relates to a two component confection having a carbonated candy component and a pliable bubble gum component with each component having a controlled water activity between 0.1 to 0.3 and which is capable of surviving long periods of storage when packaged in a moisture resistant material.

It is also known to provide chewing gum compositions which have low moisture content and/or low moisture pickup during storage. For example, U.S. Patent No. 4,683,138 to Glass, et al. discloses a low moisture, sugarless, center-filled chewing gum wherein a low moisture, liquid center-fill is incorporated into a cavity within a substantially anhydrous chewing gum shell. The Glass, et al. '138 disclosure along with all the references cited therein, are directed to reducing the amount of moisture in chewing gum composition whether its sugar-containing or sugarless gum.

In the case of anhydrous gum compositions, however, there still remains a problem in providing sugarless compositions with low moisture pick-up, especially when humectant or hygroscopic materials are employed as a means of retaining desirable non-staling and flexible characteristics. Generally, sugarless gums contain 65 - 75% of a sugar-alcohol such as sorbitol, mannitol, xylitol or mixtures thereof. These materials are moisture absorbent and act like humectants. Thus, sugar alcohol generally cause moisture pick-up and retention. Additionally, the use of high percentage of glycerin, such as in U.S. 4,574,422, further

increases the moisture pick-up potential.

In the above cited disclosures, as well as the state of the art in general, different combinations of gum base ingredients and flavor/sweetener/bulking agent combinations have been tried with varying degrees of success to overcome all the problems associated with providing a sugarless gum with excellent organoleptic properties yet which is easily coated with a confectionery coating such that an improved coated gum, e.g., a coated pellet, can be formed.

According to the present invention there is provided the use of a racemic mixture of alpha-D-glucopyranosyl-1-6-mannitol and alpha-D-glucopyranosyl-1-6-sorbitol in a sugarless low-moisture absorbing chewing gum composition in an amount of from 10 to 70% by weight, with respect to the weight of the chewing gum composition, to texturise and maintain said composition in a substantially anhydrous form and to provide an improved structural gum surface for a confectionery coating, the composition further comprising a high intensity sweetener and from 10 to 75% by weight of the composition of a gum base.

The invention also comprises the use of a racemic mixture of alpha-D-glucopyranosyl-1-6-mannitol and alpha-D-glucopyranosyl-1-6-sorbitol in a confectionary coated sugarless low-moisture absorbing chewing gum composition in an amount of from 10 to 70% by weight, with respect to the weight of the chewing gum composition, to texturise and maintain said composition in a substantially anhydrous form and to provide an improved structural gum surface for a confectionery coating, the composition further comprising a hard shell confectionary coating.

The use according to the present invention. provides both low moisture pick-up and firmer texture which result in facilitating coating processes for hard confectionery coated pelletized gum. The gum base component of said composition can be present in an amount of from 10% to 75% based on the weight of the composition,and the composition as a whole should include no greater than 3.5% by weight of moisture.

The use according to the present invention prevents substantial moisture pick-up and maintains a firm, easily coated gum matrix or structure. A balance of firmness in the chewing gum must be maintained to allow for an acceptable chew. The bulking agent is used in an amount from 10% to 70% and preferably 25% to 65%.

The bulking agent used is an isomalt which is a racemic mixture of alpha-D-glucopyranosyl, 1,6-mannitol and 1,6-sorbitol and has melting point of 145-150 °C. Preferably the isomalt is used in an amount from 28% to 60% by weight of the composition.

The chewing gum composition in which said isomalt is used may also include glycerin in an amount sufficient to enhance the non-staling features of the composition. However, if glycerin is added, generally the non-hygroscopic bulking agent must be used in sufficient amounts to counteract the tendency of glycerin to pick-up moisture from the atmosphere. Optionally, a sugar alcohol can also be present in an amount to provide an additional sweetness to the resulting gum product. Generally, the majority of the sweetness is imparted by the high intensity sweeteners rather than the sugar alcohols, because of the latter's tendency to pick-up moisture.

Glycerin can be included in an amount from 0 to 18%, and preferably from 2 to 14% based on the weight of the composition, and the sugar alcohol can be included in an amount of up to 67% based on the weight of the composition. When the extreme amounts of sugar alcohol is added, the bulking agent must be used in increased or adjusted amounts to counteract the hygroscopic tendency of the sugar alcohols.

Furthermore, the composition includes high intensity sweeteners as the predominant sweetener in an amount from .05 to 3.0% based on weight and can include flavor agents in an amount of from 0.05 to 3% by weight.

The present invention includes the use of a racemic mixture of alpha-D-glucopyranosyl-1-6-mannitol and alpha-D-glucopyranosyl-1-6-sorbitol in a confectionary coated chewing gum composition in an amount of from 10 - 70 % by weight, with respect to that of the chewing gum composition, to texturise and maintain said composition in a substantially anhydrous form and to provide an improved structured gum surface for a confectionary coating, the composition further comprising a hard shell confectionary coating.

The coated gum confectionery product can be either sugar containing or sugarless, and is preferably sugarless. Coated gums are usually in the pelletized form, having a crunchy, hard confectionery (sugar or sugarless) coated thereon.

As a result of the present ly disclosed use, a substantially anhydrous, sugarless gum product can be provided which has a firmer, but acceptably chewable texture, and very low-moisture pick-up, both of which enhance processing and packaging, as well as increasing overall organoleptic acceptability.

For a better understanding of the present invention, together with other and further objects, reference is made to the following detailed description, and its scope will be pointed out in the appended claims. The chewing gum composition in which the said racemic mixture is used are low-moisture sugarless chewing gum compositions which include gum base in an amount which will vary depending on the type of gum

product desired, the consistency desired as well as the elastomeric properties. In general, the base can be included in the final chewing gum composition product in amounts from 10 to 75% by weight of the final chewing gum product composition, and in preferred amounts of from 15 to 40%, and most preferably of from 23 to 35% by weight.

The elastomer component of the gum base can be selected from the synthetic elastomers styrene-butadiene copolymer, polyisobutylene, isobutylene-isoprene copolymer (butyl rubber), natural rubber (polyisoprene), as well as masticatory substances of natural origin, such as rubber latex solids, chicle, crown gum, nisparo, rosidinha, jelutong, pendare, perillo, niger gutta, tunu and mixtures thereof.

The resin component can be selected from polyvinyl butyl ester, copolymers of vinyl esters and vinyl ethers, polyethylene, ethylene-vinyl acetate copolymers, vinyl acetate-vinyl alcohol copolymers, vinyl acetate vinyl laurate copolymers, and in particular high molecular weight polyvinyl acetate, which is at least 20,000 MWU.

The gum base usually includes an elastomer solvent, which may be selected from terpene resins, such as polymers of alpha-pinene or beta-pinene; rosin derivatives including hydrogenated or partially hydrogenated derivatives, such as the glycerol ester of polymerized rosin, alcohol esters of rosin, such as the glycerol ester of hydrogenated rosin, the pentaerythritol ester of hydrogenated rosin, the glyceryl ester of rosin and mixtures thereof.

The base may include an oleaginous plasticizer, such as hydrogenated vegetable oil, cocoa butter, natural waxes, petroleum waxes such as the polyethylene waxes, paraffin waxes, and microcrystalline waxes with melting points higher than 80 °C, or mixtures thereof. These materials may be utilized generally as softeners.

The gum base may include mineral adjuvants such as calcium carbonate, magnesium carbonate, alumina, aluminum hydroxide, aluminum silicate, talc, tricalcium phosphate and the like; as well as mixtures thereof. These mineral adjuvants may serve as fillers and texturizing agents.

Fatty acids may also be included, to serve as softeners, and suitable fatty acids would include stearic acid, palmitic acid, oleic acid, and mixtures thereof. The gum bases also frequently include emulsifiers, particularly those that would be compatible with the vinyl polymer, if included in the base. Particularly, lecithin, glyceryl monostearate, fatty acid monoglycerides, diglycerides and triglycerides, glycerol triacetate, propylene glycol monostearate and mixtures thereof may be used.

The gum base composition may also include conventional additives such as antioxidants, preservatives, colorants and the like. For example, titanium dioxide may be utilized as a colorant, and an antioxidant such as butylated hydroxytoluene, butylated hydroxyanisole, propyl gallate, and mixtures thereof, may also be included.

Naturally, the gum bases may be prepared for a variety of products, including conventional gums and bubble gums, and the invention is not limited to a specific gum base formulation.

Although glycerin is considered to be a humectant, it has been found that it also enhances preservation of the chewing a gum composition as a whole over a period of time. Therefore it may be desirable to include glycerin in an anhydrous gum product even though it is desired to avoid moisture pick-up. Accordingly, glycerin may be included in the composition preferably in anhydrous form, such as commercially available in the United States Pharmacopoeia (USP) grade. If glycerin is included in the composition it is preferably used in amounts from 0 to 18%, and most preferably from 2 to 14% based on weight of the composition.

Sugar alcohols useful in the inventive compositions can be selected from the group consisting of sorbitol, mannitol, xylitol and mixtures thereof. While these sugar alcohols can be added as a substantially anhydrous mixture or component to the gum composition, it has been found that the presence of a bulking-amount of sugar alcohol bestows on the composition an unwanted degree of moisture pick-up both, short and long term. Accordingly, while sugar alcohols can be included in the composition in an amount of to 67% by weight of the overall composition, it is only considered to be an optional ingredient which can be used as a sweetening agent if it can be accomplished without significantly increasing the moisture pick-up of the end product.

As previously mentioned high intensity sweeteners are incorporated as the primary sweeteners and include saccharine and its various salts such as sodium or calcium salts; cyclamic acid and its various salts such as the sodium salt; the dipeptite sweeteners such as aspartame; amino acid based sweeteners; dihydrochalcone; glycyrrhizin; Stevia rebaudiana (Stevioside); chlorinated sucrose derivatives such as sucrolose; lycasin; and other high intensity sweeteners.

Other conventional ingredients which may be added to the composition include a flavor component such as flavoring agents selected from the group consisting of natural or synthetic flavor oils and extracts derived from plants, leaves, flowers, fruits and so forth, and combinations thereof. Representative flavor

agents include: spearmint oil, cinnamon oil, oil of wintergreen (methylsalicylate) and peppermint oils. Also considered useful are the natural or synthetic fruit flavors such as citrus oil including lemon, orange, grape, lime and grapefruit and fruit essences including apple, strawberry, cherry, pineapple and so forth. Other ingredients which are useful in the flavor component include citric acid, malic acid, tartaric acid and the like, as well as mixtures

The key however, to the present invention is the use of a low-moisture pick-up sweetener-bulking agent in the form of a racemic mixture of alpha-D-glucopyranosyl-1-6-mannitol and alpha-D-glucopyranosyl-1-6-sorbitol which can be combined with glycerin or low amounts of sugar alcohol in a sugarless gum composition to: (1) significantly reduce the moisture pick-up over a period of time and (2) to provide sufficient firmness in textural and structural integrity of the gum surface and matrix to allow for easy coating with confectionery coating compositions.

Said bulking agent used in the present invention is commercially known as PALATINIT®. The chemical structures of the components of said mixture are given below.

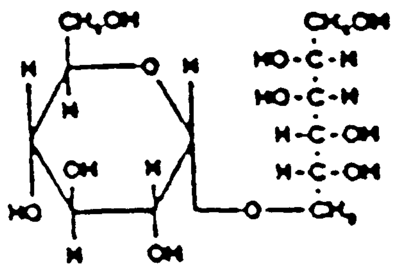

α-D-Glucopyranosyl-(1—6)-mannitol

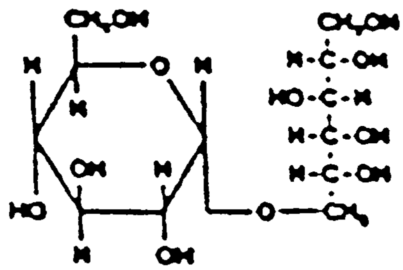

α-D-Glucopyranosyl-(1—6)-sorbitol

While the isomalt PALATINIT® is known to have a relative sweetness when compared to sucrose of only from 0.50 to 0.60, when it is used according to the present invention in a chewing gum composition in combination with high intensity sweeteners, the required sweetness level is obtained.

Chewing gum compositions, in which a racemic mixture of alpha-D-glucopyranosyl-1-6-mannitol and alpha-D-glucopyranosyl-1-6-sorbitol was used to texturise and maintain said composition in a substantially anhydrous form and to provide an improved structural gum surface for a confectionary coating were prepared. Said compositions were compared with a control sugarless chewing gum composition having the formulation given below. It was found that not only the processing characteristics of the compositions in which said mixture was used, but the end product of the composition, was superior to known sugarless chewing gum compositions in terms of firmness of texture which allowed for easier processing yet acceptable chew.

EXAMPLES

| CONTROL SAMPLE | |
|---|---|
| INGREDIENT | PERCENT BY WEIGHT |
| Gum Base | 23.00% |
| Sorbitol | 51.00% |
| Mannitol | 7.07% |
| High Intensity Sweetener (Saccharin) | 0.14% |
| Glycerin | 12.00% |
| Softener | 4.86% |
| Flavorant | 1.75% |
| Color Agent | 0.18% |

Chewing gum compositions comprising the use of PALATINIT® according to the present invention.

| INGREDIENT | SAMPLE 1 | SAMPLE 2 | SAMPLE 3 |
|---|---|---|---|
| Gum Base | 23.00% | 23.00% | 23.20% |
| Isomalt PALATINIT® | 25.50% | 51.00% | 58.20% |
| Sorbitol | 25.50% | -- | -- |
| Mannitol | 7.07% | 7.07% | -- |
| High Intensity Sweetener | | | |
| Saccharin | 0.14% | 0.14% | -- |
| Aspartame | -- | -- | 0.35% |
| Glycerin | 12.00% | 12.00% | 13.00% |
| Softener | 4.86% | 4.86% | 3.65% |
| Flavorant | 1.73% | 1.73% | 1.50% |
| Color Agent | 0.18% | 0.18% | 0.10% |

Tests were conducted to determine the amount of moisture absorbed by samples over a period of five weeks at a temperature of 27°C (80°F) a relative room humidity of 80%. The results of the tests conducted, which include measuring the amount of moisture picked-up over the respective periods of time are shown in Fig. 1. As can be seen from Fig. 1, the gums in which PALATINIT® is used do not absorb as much moisture as the gums containing the sorbitol. In fact, with 100% sorbitol replacement, the amount of

moisture picked-up over five weeks is only 11.17%. This is a significant improvement over sugarless, glycerin-sorbitol (without PALATINIT® or a low-moisture, non-hygroscopic bulking agent) containing gums which is as high as 26.6% after five weeks period.

An accelerated aging Instron test was conducted to determine the relative hardness of the gum by the use PALATINIT® in combination with glycerin to replace sugar alchohls. The purpose of these hardness tests was to demonstrate that the use according to the present invention provides chewing gum compositions which retain their firmness over an extended time period such that the coating process can be facilitated. Since the compositions in which PALATINIT® was used were initially firmer, and due to the presence of the non-hygroscopic bulking agent in the required flavorants, the moisture-level remained relatively level. Moisture pick-up would result in a reduction of the gum's firmness, making coating with a confectionery coating more difficult and less effective.

The equipment used was the Instron Model 1130 with a digital readout from Valtec Associates Inc. Pieces of gum from each of the examples were used. Initially unused gum pieces were stored in a desiccator at 23°C and 23% room humidity. Basically a 0.5 cm (3/16 inch) plunger was brought to bear against the surface of the gum and a controlled force was exerted until penetration of the surface occurred. The results, which are measured in pounds, are shown in Fig. 2.

The results show that the hardness level of the compositions in which PALATINIT® is used remains higher than conventional gum compostions.

Additionally, chewing gum samples having candy coated shells were prepared in which samples PALATINIT® was used according to the present invention. The gum compositions made in accordance with the following formulae:

| COATED GUM SAMPLES | | | |
|---|---|---|---|
| INGREDIENT | CONTROL COMPOSITION FOR COATING | SAMPLE 4 | SAMPLE 5 |
| Gum Base | 23.02% | 23.02% | 23.02% |
| Sorbitol | 53.40% | 29.84% | -- |
| Mannitol | 6.28% | -- | -- |
| Sweetener-Bulking Agent (PALATINIT®) | -- | 29.84% | 59.68% |
| Glycerin | 12.00% | 12.00% | 12.00% |
| High Intensity Sweetener (Saccharin) | 0.14% | 0.14% | 0.14% |
| Flavorant | 2.01% | 2.01% | 2.01% |
| Softener | 3.15% | 3.15% | 3.15% |

Gum pieces prepared according to the Sample Formulae set forth above were subjected to hardness testing to determine whether or not the product was acceptably soft for the consumer market. The results are set forth in the Table below.

| SOFTNESS TABLE | | | | | | |
|---|---|---|---|---|---|---|
| Sample Coated | Durometer | | | Instron kg (lbs) | | |
| | Day 0 | Day 1 | Day 2 | Day 0 | Day 1 | Day 2 |
| Control | 9.65 | 11.70 | 12.54 | 1.82 (4.05) | 2.47 (5.49) | 2.46 (5.46) |
| Sample 4 | 18.55 | 18.90 | 20.3 | 2.51 (5.58) | 4.28 (9.51) | 4.34 (9.66) |
| Sample 5 | 31.70 | 34.55 | 34.85 | 4.07 (9.04) | 6.11 (13.48) | 5.88 (13.05) |

The gum samples in which PALATINIT® was used in accordance with the present invention had a firmer structure which facilitated the subsequent coating process, while also maintaining an acceptably soft texture over several days. It is apparent that the compositions of Samples 4 & 5 are significantly firmer than the control. The resulting pellets formed from said compositions were thus easier to effectively coat and resulted in a higher quality sugarless product.

The samples resulting from the above formulations were then coated by a conventional sugarless coating process such as those set forth in U.S. Patent No. 4,317,838 and U.S. Patent No. 4,238,510, both to Cherukuri, et al.

The coated samples were subjected to Panel testing to determine quality acceptance of the final product. The results are set forth below.

| EXPERT PANEL TESTING | | |
|---|---|---|
| Specimen | Sweetness | Crispness/Texture or "Crunch" Test |
| Coated Control | Good | Good |
| Sample 4 | Good | Excellent |
| Sample 5 | Good | Excellent |

As can be seen samples 4 and 5 provided favorable results when compared to the coated control sample. Whereas in the past, a crunchy, acceptably sugarless coated pellet gum was not easily formed due to the lack of necessary firmness in the gum composition due to moisture pick-up, the use of PALATINIT® according to the invention in the compositions clearly allows for easier processing (coating), and delivery of the required crunch and chew expected of coated pelleted gum.

**Claims**

1. Use of a racemic mixture of alpha-D-glucopyranosyl-1-6-mannitol and alpha-D-glucopyranosyl-1-6-sorbitol in a sugarless low-moisture absorbing chewing gum composition in an amount of from 10 to 70% by weight, with respect to the weight of the chewing gum composition, to texturise and maintain said composition in a substantially anhydrous form and to provide an improved structural gum surface for a confectionery coating, the composition further comprising a high intensity sweetener and from 10 to 75% by weight of the composition of a gum base.

2. The use according to claim 1, wherein said mixture is present in the composition in an amount of from 28% to 60% by weight.

3. The use according to either claims 1 or 2, in which the composition further comprises a flavour component.

4. The use according to any one of claims 1 to 3, wherein glycerin is included in the composition in an amount of from 0% to 18% based on the weight of the gum composition, and preferably is included in an amount of from 2% to 14% by weight.

5. The use according to any one of claims 1 to 4, wherein said high intensity sweetener is present in the composition in an amount of from 0.05 to 3.0% based on weight.

6. The use according to any one of claims 1 to 5, wherein said flavour component is present in the composition in an amount of from 0.05 to 3.0% by weight.

7. The use according to any one of claims 1 to 6, wherein a sugar alcohol is present in the composition in an amount of up to 67% by weight.

8. Use of a racemic mixture of alpha-D-glucopyranosyl-1-6-mannitol and alpha-D-glucopyranosyl-1-6-sorbitol in a confectionary coated sugarless low-moisture absorbing chewing gum composition in an amount of from 10 to 70% by weight, with respect to the weight of the chewing gum composition, to texturise and maintain said composition in a substantially anhydrous form and to provide an improved structural gum surface for a confectionery coating, the composition further comprising a hard shell confectionary coating.

9. The use according to claim 8, wherein said coating is a sugarless coating.

10. The use according to claim 8, wherein glycerin is present in the composition in an amount from 0% to 18% based on weight of the gum composition.

11. The use according to any one of claims 8 to 10, wherein a sugar alcohol is present in the composition in an amount of up to 67% by weight.

12. The use according to any one of claims 8 to 11, in which the composition further includes a flavour component present in an amount from 0.05 to 3.0% by weight of said gum composition.

13. The use according to any one of claims 8 to 12, wherein a high intensity sweetener is present in the composition in an amount from 0.05 to 3.0% based on weight of said gum composition.

## Patentansprüche

1. Verwendung eines racemischen Gemischs aus α-D-Glucopyranosyl-1-6-mannit und α-D-Glucopyranosyl-1-6-sorbit in einer zuckerfreien, wenig Feuchtigkeit absorbierenden Kaugummimasse in einer Menge von 10 - 70 Gew.-%, bezogen auf das Gewicht der Kaugummimasse, zur Gefügevermittlung oder -verstärkung und Erhaltung einer praktisch wasserfreien Form der Masse und zur Schaffung einer bezüglich der Struktur für einen Süßwarenüberzug verbesserten Gummioberfläche, wobei die Masse weiterhin ein hochintensives Süßungsmittel und 10 - 75 Gew.-% der Masse an einer Gummigrundlage enthält.

2. Verwendung nach Anspruch 1, wobei das Gemisch in der Masse in einer Menge von 28 - 60 Gew.-% enthalten ist.

3. Verwendung nach einem der Ansprüche 1 oder 2, wobei die Masse zusätzlich eine Geschmackskomponente enthält.

4. Verwendung nach einem der Ansprüche 1 bis 3, wobei in der Masse, bezogen auf das Gewicht der Gummimasse, Glycerin in einer Menge von 0 - 18, vorzugsweise 2 - 14 Gew.-% enthalten ist.

5. Verwendung nach einem der Ansprüche 1 bis 4, wobei das hochintensive Süßungsmittel in der Masse in einer Menge, bezogen auf das Gewicht, von 0,05 - 3,0% enthalten ist.

6. Verwendung nach einem der Ansprüche 1 bis 5, wobei die Geschmackskomponente in der Masse in einer Menge von 0,05 - 3,0 Gew.-% enthalten ist.

7. Verwendung nach einem der Ansprüche 1 bis 6, wobei in der Masse ein Zuckeralkohol in einer Menge von bis zu 67 Gew.-% enthalten ist.

8. Verwendung eines racemischen Gemischs aus α-D-Glucopyranosyl-1-6-mannit und α-D-Glucopyranosyl-1-6-sorbit in einer mit einer Süßware beschichteten, zuckerfreien, wenig Feuchtigkeit absorbierenden Kaugummimasse in einer Menge von 10 - 70 Gew.-%, bezogen auf das Gewicht der Kaugummimasse, zur Gefügevermittlung oder -verbesserung und Erhaltung einer praktisch wasserfreien Form der Masse und zur Schaffung einer bezüglich der Struktur für einen Süßwarenüberzug verbesserten Gummioberfläche, wobei die Masse weiterhin einen hartschaligen Süßwarenüberzug aufweist.

9. Verwendung nach Anspruch 8, wobei der Überzug aus einem zuckerfreien Überzug besteht.

10. Verwendung nach Anspruch 8, wobei in der Masse Glycerin in einer Menge von 0 - 18%, bezogen auf das Gewicht der Gummimasse, enthalten ist.

11. Verwendung nach einem der Ansprüche 8 bis 10, wobei in der Masse ein Zuckeralkohol in einer Menge von bis zu 67 Gew.-% enthalten ist.

12. Verwendung nach einem der Ansprüche 8 bis 11, wobei die Masse zusätzlich eine Geschmackskomponente in einer Menge von 0,05 - 3,0 Gew.-% der Gummimasse enthält.

13. Verwendung nach einem der Ansprüche 8 bis 12, wobei in der Masse ein hochintensives Süßungsmittel in einer Menge von 0,05 - 3,0%, bezogen auf das Gewicht der Gummimasse, enthalten ist.

## Revendications

1. Utilisation d'un mélange racémique d'alpha-D-glucopyranosyl-1,6-mannitol et d'alpha-D-glucopyranosyl-1,6-sorbitol dans une composition de gomme à mâcher exempte de sucre à faible potentiel d'absorption d'humidité, en une quantité de 10 à 70% en poids, par rapport au poids de la composition de la gomme à mâcher, pour texturer et maintenir cette composition sous une forme pratiquement anhydre et, ainsi, obtenir une surface de gomme présentant une structure améliorée, susceptible de recevoir un revêtement de confiserie, la composition comprenant de plus un édulcorant de forte intensité et de 10 à 75% en poids de base de gomme par rapport au poids de la composition.

2. Utilisation suivant la revendication 1, dans laquelle ce mélange est présent dans la composition en une quantité comprise entre 28 et 60% en poids.

3. Utilisation suivant les revendications 1 ou 2, dans laquelle la composition comprend de plus un composant aromatique.

4. Utilisation suivant l'une quelconque des revendications 1 à 3, dans laquelle de la glycérine est incluse dans la composition en une quantité de 0 à 18% par rapport au poids de la composition de gomme et de préférence en une quantité de 2 à 14% en poids.

5. Utilisation suivant l'une quelconque des revendications 1 à 4, dans laquelle cet édulcorant de forte intensité est présent dans la composition en une quantité de 0,05 à 3,0% en poids.

6. Utilisation suivant l'une quelconque des revendications 1 à 5, dans laquelle ce composant aromatique est présent dans la composition en une quantité de 0,05 à 3,0% en poids.

7. Utilisation suivant l'une quelconque des revendications 1 à 6, dans laquelle un sucre alcool est présent dans la composition en une quantité allant jusqu'à 67% en poids.

8. Utilisation d'un mélange racémique d'alpha-D-glucopyranosyl-1,6-mannitol et d'alpha-D-glucopyranosyl-1,6-sorbitol dans une composition de gomme à mâcher exempte de sucre, à faible potentiel d'absorption d'humidité et revêtue de confiserie, en une quantité de 10 à 70% en poids par rapport au poids de la composition de la gomme à mâcher, pour texturer et maintenir cette composition sous une forme pratiquement anhydre et, ainsi, obtenir une surface de gomme présentant une structure améliorée susceptible de recevoir un revêtement de confiserie, la composition comprenant de plus un revêtement de confiserie formant une enveloppe dure.

9. Utilisation suivant la revendication 8, dans laquelle ce revêtement est un revêtement exempt de sucre.

10. Utilisation suivant la revendication 8, dans laquelle de la glycérine est incluse dans la composition en une quantité de 0 à 18% par rapport au poids de la composition de gomme.

11. Utilisation suivant l'une quelconque des revendications 8 à 10, dans laquelle un dérivé alcoolique d'un sucre est présent dans la composition en une quantité allant jusqu'à 67% en poids.

12. Utilisation suivant l'une quelconque des revendications 8 à 11, dans laquelle la composition comprend de plus un composant aromatique qui représente de 0,05 à 3,0% en poids de cette composition de gomme.

13. Utilisation suivant l'une quelconque des revendications 8 à 12, dans laquelle un édulcorant de forte intensité est présent dans la composition en une quantité de 0,05 à 3,0% par rapport au poids de cette composition de gomme.

FIG.1

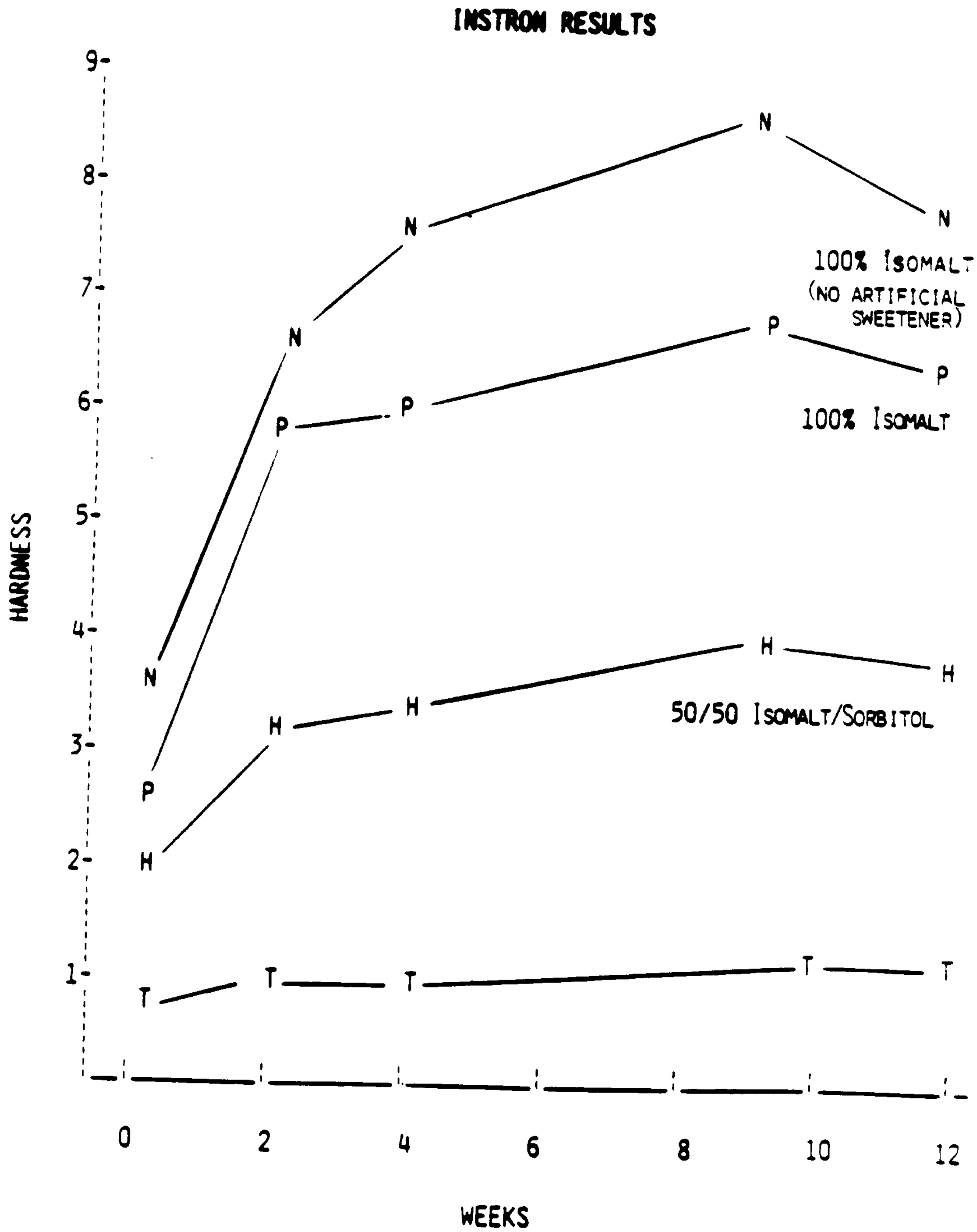
INSTRON RESULTS
HARDNESS
9
8
7
6
5
4
3
2
1
N
P
H
T
100% ISOMALT
(NO ARTIFICIAL
SWEETENER)
100% ISOMALT
50/50 ISOMALT/SORBITOL
0
2
4
6
8
10
12
WEEKS

FIG.2

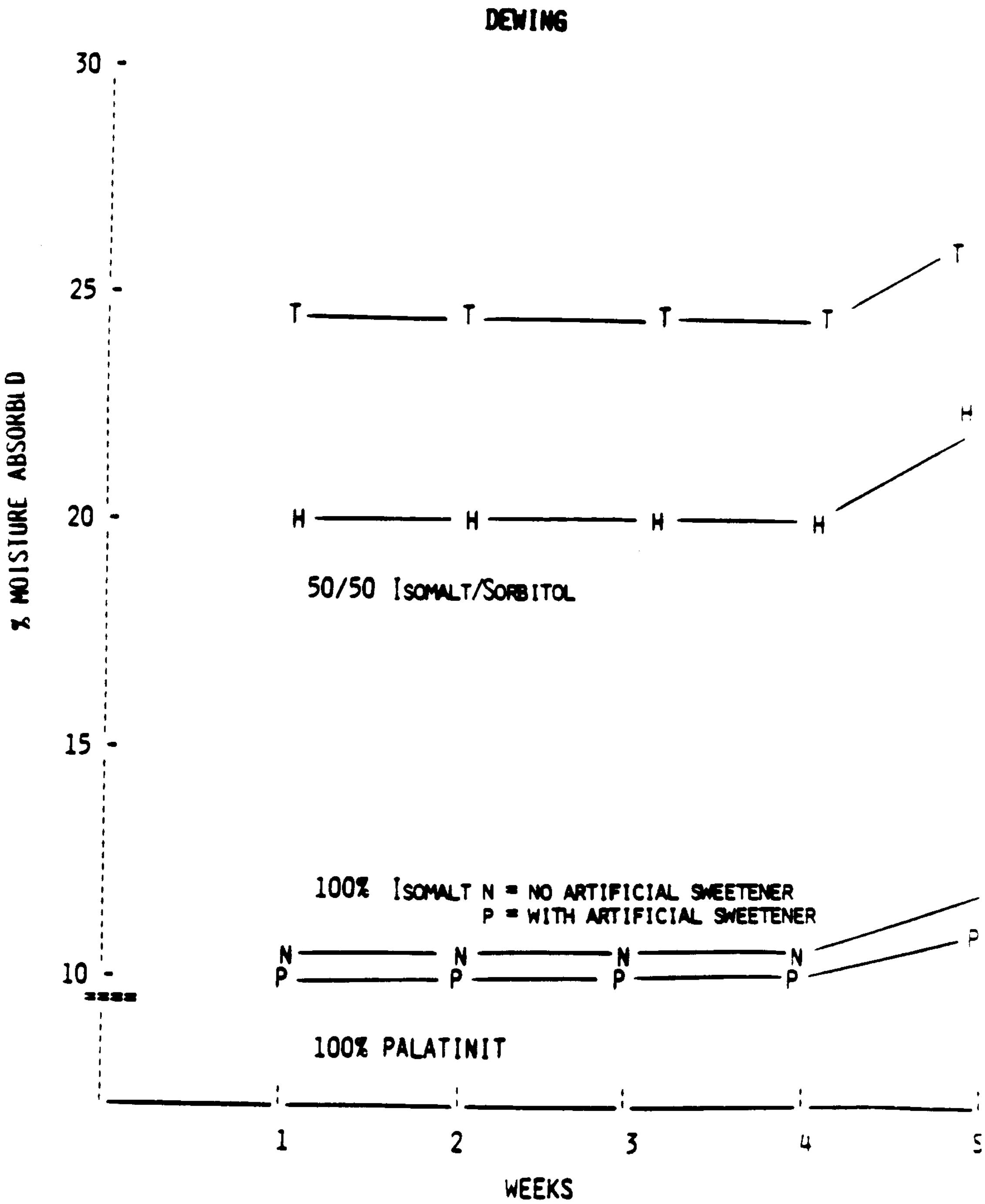
DEWING
30
25
20
15
10
% MOISTURE ABSORBED
T
H
50/50 ISOMALT/SORBITOL
100% ISOMALT N = NO ARTIFICIAL SWEETENER
P = WITH ARTIFICIAL SWEETENER
N
P
100% PALATINIT
1
2
3
4
5
WEEKS